# EUROPÄISCHE PATENTSCHRIFT

(11) **EP 3 398 711 B1**
(45) Veröffentlichungstag und Bekanntmachung des Hinweises auf die Patenterteilung: **10.04.2019**
(21) Anmeldenummer: 17169245.2
(22) Anmeldetag: 03.05.2017
(51) Int. Cl.: B23Q 1/01, B25J 9/00, B23Q 7/04, B23Q 11/08

(54) **WERKZEUGMASCHINE MIT MODULARER ROBOTER-BELADEZELLE**
MACHINE TOOL WITH MODULAR ROBOT LOADING CELL
MACHINE-OUTIL AYANT UNE CELLULE DE CHARGE DE ROBOT MODULAIRE

(43) Veröffentlichungstag der Anmeldung: 07.11.2018
(73) Patentinhaber: Schwäbische Werkzeugmaschinen GmbH, 78713 Schramberg-Waldmössingen (DE)
(72) Erfinder: Armleder, Wolfgang, 78628 Rottweil (DE); Eger, Martin, 78737 Fluorn-Winzeln (DE)
(74) Vertreter: Kohler Schmid Möbus Patentanwälte

(56) Entgegenhaltungen:
- EP-A1- 2 036 664
- DE-A1-102014 007 832
- DE-A1-102015 118 031
- DE-B3- 10 334 677
- DE-B3-102006 052 933

## Beschreibung

Die Erfindung betrifft eine Werkzeugmaschine zur insbesondere spanenden Bearbeitung von Werkstücken, aufweisend einen an einem Maschinengestell drehbar gelagerten Werkstücktisch, insbesondere Doppelschwenkträger, für zu bearbeitende Werkstücke und eine am Maschinengestell gehaltene, insbesondere horizontale Werkzeugspindel mit einem Werkzeug zum Bearbeiten von Werkstücken.

Eine derartige ist beispielsweise durch die DE 103 34 677 B3 bekannt geworden. Bei dieser bekannten Werkzeugmaschine ist ein Doppelschwenktisch um eine horizontale Achse gelagert, dessen einer Schwenktisch als Bearbeitungsseite und dessen anderer Schwenktisch als Bestückungsseite durch Verschwenken des Doppelschwenktisches vertauschbar sind. Am Doppelschwenktisch ist eine Trennwand vorgesehen, welche die Bearbeitungsseite und die Bestückungsseite voneinander trennt, und eine Absaugeinrichtung ist über mindestens ein Spänesieb mit der Bearbeitungsseite verbunden. Die Trennwand weist eine Kammer mit einem seitlichen Spänesieb und einer nach außen offenen Öffnung auf, welche in der einen Schwenkendstellung des Doppelschwenktisches mit der Absaugeinrichtung verbunden ist. In der anderen Schwenkendstellung des Doppelschwenktisches ist eine Düse einer Blas- und/oder Spüleinrichtung innenseitig auf das Spänesieb gerichtet.

Üblicherweise werden bei Werkzeugmaschinen mit einem drehbar gelagerten Werkstücktisch Werkstücke von außen über einen Bestückungsroboter be- und entladen, der entweder auf dem Maschinenbett steht oder frontseitig an eine Maschinenseite angeflanscht ist. Für einen solchen Bestückungsroboter stellen im Maschineninnenraum befindliche Maschinenkomponenten, wie z.B. ausziehbare Schubladen eines Werkstückspeichers, Hindernisse dar, um die der Bestückungsroboter herumschwenken muss.

Es ist demgegenüber die Aufgabe der Erfindung, bei einer Werkzeugmaschine der eingangs genannten Art den Platzbedarf zu verringern und den Integrationsgrad der Maschinenkomponenten zu erhöhen.

Diese Aufgabe wird erfindungsgemäß dadurch gelöst, dass ein Roboter zum Beladen des Werkstücktischs mit zu bearbeitenden Werkstücken und zum Entladen des Werkstücktischs von bearbeiteten Werkstücken in einer Beladezelle, welche an das Maschinengestell seitlich angekoppelt ist, hängend gehalten ist, dass die Beladezelle eine um eine Vertikalachse zwischen einer Offen- und einer Geschlossenstellung verschwenkbare Zellentür, insbesondere Kreisbogentür, aufweist, die den Zelleninnenraum in der Geschlossenstellung verschließt und in der Offenstellung freigibt, und dass die Zellentür einen insbesondere kreissektorförmigen Türboden aufweist, der zumindest in der Geschlossenstellung unterhalb des Roboters in den Zelleninnenraum hineinragt. Bevorzugt ist der Roboter an der Zellendecke der Beladezelle hängend gehalten.

Erfindungsgemäß wird somit eine autarke Roboter-Beladezelle zum Andocken an eine im Wesentlichen unveränderte Grundmaschine bereitgestellt, wobei im Maschineninnenraum befindliche Maschinenkomponenten für den herunterhängenden Roboter kein Hindernis darstellen, was einfache und schnelle Roboterbewegungen ermöglicht. Die Beladezelle bietet zudem Platz für zusätzliche Technologien, wie z.B. Beschriften, Umspannen, Wenden, Reinigen, Trocknen, Vermessen von Werkstücken oder zusätzliche Zerspanungsaufgaben wie z.B. Entgraten von Werkstücken. Der vollautomatische Be- und Entladevorgang von Werkstücken mittels des Roboters findet hinter der geschlossen Zellentür statt, während das Robotereinrichten, das manuelle Be- und Entladen von Werkstücken sowie das Werkstückumrüsten vom Maschinenbediener bei geöffneter Zellentür vorgenommen werden.

Besonders bevorzugt weist die Zellentür einen insbesondere kreissektorförmigen Türoberboden, der zumindest in der Geschlossenstellung oberhalb des Roboters angeordnet ist. Vorteilhaft weist der Türboden ein Gefälle auf, damit von Werkstücken abtropfendes Bohrwasser gerichtet abfließen kann. Die Zellentür kann sich nach unten bis auf das Bodenniveau des Maschinengestells oder, was bevorzugt ist, nur bis auf etwa die halbe Höhe eines vor dem Maschinengestell stehenden Maschinenbedieners erstecken.

Für eine besonders einfache Ankopplung kann die Beladezelle mindestens eine Befestigungsfläche, insbesondere eine untere und eine obere Befestigungsfläche, aufweisen, mit der bzw. denen die Beladezelle an entsprechenden Gegenbefestigungsflächen des Maschinengestells befestigt ist.

Um eine Übertragung von Vibrationen zwischen Maschinengestell und Beladezelle zu unterbinden, ist bevorzugt zwischen einer Befestigungsfläche der Beladezelle und der Gegenbefestigungsfläche des Maschinengestells eine Dämpfungsschicht angeordnet, die z.B. als Elastomer oder Metallschaum ausgeführt sein kann.

Weiter bevorzugt weist die Beladezelle einen mit Gefälle versehenen Zellenboden auf, der an einen Abfluss des Maschinengestells angebunden ist. So kann das von Werkstücken abtropfende Bohrwasser aus der Beladezelle abfließen und einer Wasseraufbereitung der Werkzeugmaschine zugeführt werden. Vorteilhaft ist die Abflussanbindung durch miteinander kommunizierende Öffnungen gebildet, die jeweils in aneinander anliegende Schnittstellflächen der Beladezelle und des Maschinengestells münden.

Vorzugsweise ist die Beladezelle zwischen dem Maschinengestell einerseits und einem Werkstückspeicher oder -förderer andererseits angeordnet. Dabei ist der Werkstückspeicher oder -förderer bevorzugt an der Beladezelle über Eck angekoppelt. Bei dieser Ecklösung erfolgt der Materialfluss, d.h. die Werkstückzu- und -abfuhr, quer zum Maschinengestell bzw. parallel zur horizontalen Drehachse des Werkstücktischs, wobei der Zugang zum Zelleninnenraum über Eck mittels der Kreisbogentür erfolgt.

Im Folgenden sind die Brutto-Stellflächen einer Maschine mit KSS(Kühlschmierstoff)-Anlage einerseits und von Ecklösung-Maschinen mit zusätzlichem vertikalem Werkstück-Palettenspeicher oder zusätzlichem Werkstück-Zuführband aufgelistet:

| | |
|---|---|
| Maschine mit KSS-Anlage | Brutto-Stellfläche 10m² |
| Maschine mit KSS-Anlage und Palettenspeicher | Brutto-Stellfläche 14m² |
| Maschine mit KSS-Anlage und Stapelzelle | Brutto-Stellfläche 16m² |
| Maschine mit KSS-Anlage und Zuführband | Brutto-Stellfläche 20m² |

Die Ecklösungen benötigen somit trotz zusätzlicher automatischer Werkstückzu- und -abfuhr nur wenig mehr Brutto-Stellfläche.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung. Die Erfindung ist in den Figuren schematisch dargestellt, so dass die wesentlichen Merkmale der Erfindung gut zu erkennen ist. Die Darstellungen sind nicht notwendigerweise maßstäblich zu verstehen.

Es zeigt:
- Fig. 1: die Vorderansicht einer erfindungsgemäßen Werkzeugmaschine mit einer angekoppelten Roboter-Beladezelle;
- Fig. 2: eine perspektivische Ansicht der Werkzeugmaschine und der noch nicht angekoppelten Beladezelle;
- Fig. 3: eine Detailansicht des in Fig. 1 gezeigten Kopplungsbereichs der anein-ander gekoppelten Werkzeugmaschine und Beladezelle;
- Fig. 4: eine Kreisbogentür der Beladezelle in ihrer Geschlossenstellung; und
- Fig. 5: eine Draufsicht von oben auf die Werkzeugmaschine von Fig. 1 und einen zusätzlichen Werkstück-Palettenspeicher.

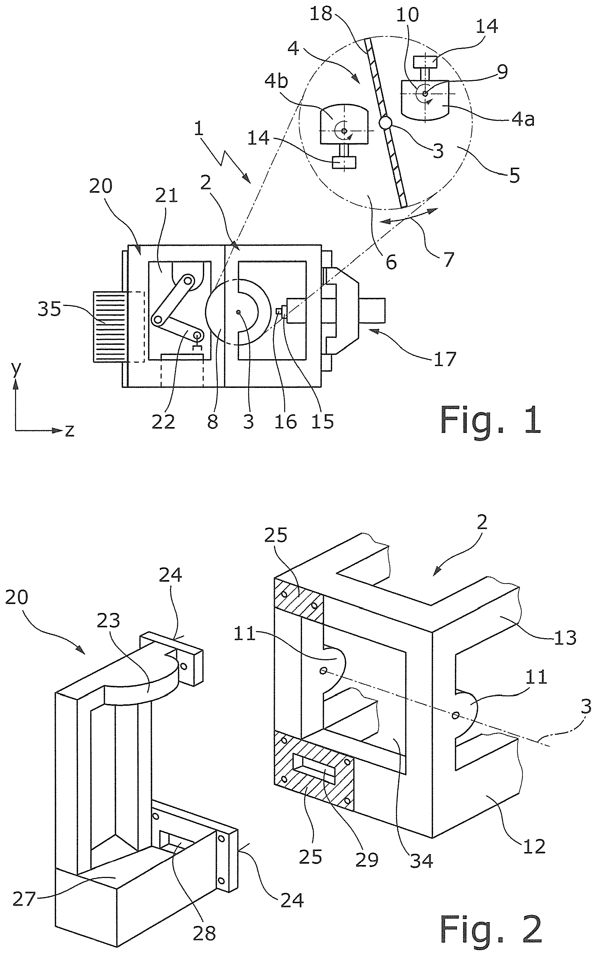

Bei der in **Fign. 1 und 2** insgesamt mit **1** bezeichneten Werkzeugmaschine zur spanenden Bearbeitung von Werkstücken ist im rahmenartigen Maschinengestell **2** um eine horizontale Achse **3** ein Werkstücktisch in Form eines Doppelschwenktischs (Doppelschwenkbalken) **4** schwenkbar gelagert, dessen einer Schwenktisch **4a** (in Fig. 1 der rechte) auf der Bearbeitungsseite **5** innerhalb eines Bearbeitungsraums und dessen anderer Schwenktisch **4b** (in Fig. 1 der linke) auf der Belade- oder Bestückungsseite **6** innerhalb eines Bestückungsraums vorgesehen sind. Durch Verschwenken (Doppelpfeil **7**) des Doppelschwenktisches 4 um die horizontale Achse 3 um 180° lassen sich der bearbeitungsseitige Schwenktisch 4a und der bestückungsseitige Schwenktisch 4b vertauschen. Die beiden Schwenktische 4a, 4b sind zwischen und an zwei Schwenkscheiben **8,** welche seitlich am Maschinengestell 2 um die horizontale Achse 3 gelagert sind, jeweils um eine horizontale Schwenkachse (A-Achse) **9** verschwenkbar (Doppelpfeil **10**) gelagert. Die Bearbeitungs- und Bestückungsräume sind entweder jeweils in sich geschlossene Maschinenräume oder bilden gemeinsam einen in sich geschlossenen Maschinenraum.

Wie in **Fig. 2** gezeigt, ist der Doppelschwenktisch 4 an zwei einander gegenüberliegenden Seitenwänden **11** des Maschinengestells 2 drehbar gelagert, die unten durch einen Bodenträger **12** und oben durch einen Deckenträger **13** miteinander verbunden sind und beispielsweise zusammen mit den Boden- und dem Deckenträgern 12, 13 ein Monoblock-Rahmengestell ausbilden.

Der bestückungsseitige Schwenktisch 4b wird mit zu bearbeitenden Werkstücken **14** bestückt, die dann nach Vertauschen der Schwenktische 4a, 4b auf der Bearbeitungsseite 5 mittels eines in einer horizontalen Arbeitsspindel **15** aufgenommenen Werkzeuges **16** bearbeitet werden. Die horizontale Arbeitsspindel 15 ist mittels einer XYZ-Schlitteneinheit **17** an den einen, in Fig. 1 rechten Stirnseiten der Seitenwände 11 befestigt. Zum Vertauschen der Schwenktische 4a, 4b wird der Doppelschwenktisch 4 in Schwenkrichtung 7 um 180° geschwenkt, wodurch sich mit vertauschten Schwenktischen 4a, 4b wieder die in Fig. 1 gezeigte Anordnung ergibt. Zusätzlich können dabei auch einer oder beide Schwenktische 4a, 4b um ihre Schwenkachsen 9 in Schwenkrichtung 10 geschwenkt werden.

Zwischen und an den beiden Schwenkscheiben 8 ist eine feststehende Spritzschutzwand **18** befestigt, die in der in Fig. 1 dargestellten Schwenkendposition des Doppelschwenktisches 4 die Bearbeitungs- und Bestückungsseiten 5, 6 voneinander trennt. Auf diese Weise kann während des Bearbeitens der Werkstücke 14 auf der Bearbeitungsseite 5 ein neues Werkstück 14 auf der Bestückungsseite aufgespannt werden, wobei das Bedienungspersonal vor spritzendem Bohrwasser oder herumfliegenden Bohrspänen etc. geschützt ist.

Wie in **Fig. 2** weiter gezeigt, ist an das Maschinengestell 2 seitlich eine Beladezelle **20** angekoppelt (angeflanscht), in deren Zelleninnenraum **21** ein (Greif)Roboter **22** zum automatischen Beladen des bestückungsseitigen Schwenktischs 4b mit zu bearbeitenden Werkstücken 14 und zum automatischen Entladen des bestückungsseitigen Schwenktischs 4b von bearbeiteten Werkstücken 14 hängend an einer Zellendecke **23** montiert ist. Vorzugsweise hat der Greifroboter 22 mindestens fünf Rotationsachsen und kann wie im gezeigten Ausführungsbeispiel mit zwei Gelenkarmen und einem Greifer ausgeführt sein.

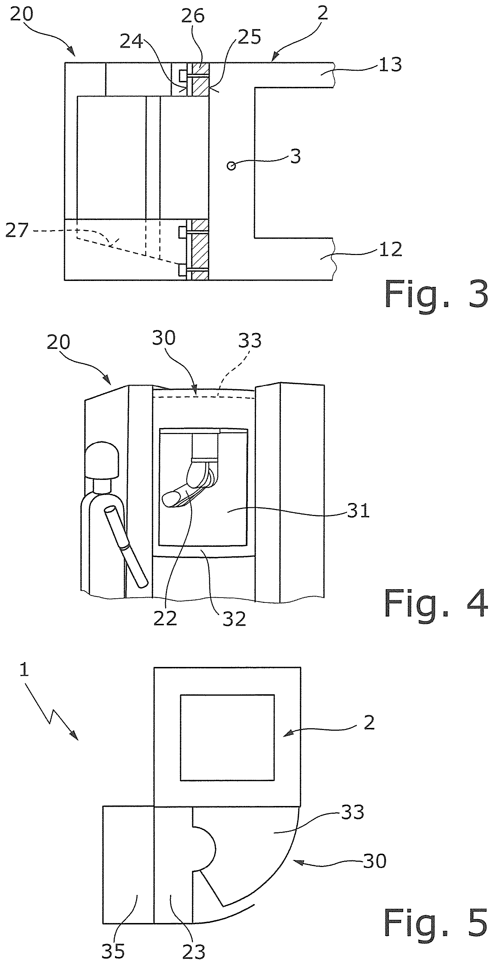

Die Beladezelle 20 weist eine untere und eine obere, seitliche Befestigungsfläche (Flanschfläche) **24** auf, mit denen die Beladezelle 20 an entsprechenden, seitlichen Gegenbefestigungsflächen **25** des Boden- und des Deckenträgers 12, 13 befestigt ist. Wie in **Fig. 3** gezeigt, ist zwischen den zellenseitigen und den maschinengestellseitigen Befestigungsflächen 24, 25 jeweils eine Dämpfungsschicht **26** angeordnet, um das Maschinengestell 2 und die Beladezelle 20 voneinander bezüglich Vibrationen zu entkoppeln.

Die Beladezelle 20 weist ferner zur Bohrwasserableitung einen Zellenboden **27** mit einem Gefälle in Richtung einer Öffnung **28** auf, welche in der unteren Befestigungsfläche 24 vorhanden ist. Das Maschinengestell 2 wiederum hat innerhalb der unteren Gegenbefestigungsfläche 25 eine korrespondierende Öffnung **29,** die zu einem nicht gezeigten (Wasser)Abfluss des Maschinengestells 2 führt. Bei angekoppelter Beladezelle 20 ist der Zellenboden 27 somit über die beiden Öffnungen 28, 29 an den Abfluss des Maschinengestells 2 angeschlossen. Bohrwasser, das von einem bearbeiteten Werkstück 14, welches gerade zurück auf die Bestückungsseite 6 verschwenkt worden ist, auf den Zellenboden 27 abtropft, wird dem Abfluss des Maschinengestells 2 zugeführt.

**Fig. 4** zeigt eine um eine Vertikalachse zwischen einer Offen- und einer Geschlossenstellung verschwenkbar gelagerte Zellentür in Form einer Kreisbogentür **30,** die den Zelleninnenraum 21 für einen außenstehenden Maschinenbediener in der Geschlossenstellung verschließt und in der Offenstellung freigibt. Die Kreisbogentür 30 hat ein Fenster **31,** durch das hindurch der Greifroboter 22 in der in Fig. 4 gezeigten Geschlossenstellung erkennbar ist. Die Kreisbogentür 30 weist einen kreissektorförmigen Türboden **32,** der in der Geschlossenstellung unterhalb des Roboters 22 in den Zelleninnenraum 21 hineinragt, und einen kreissektorförmigen Türoberboden **33** auf, der in der Geschlossenstellung oberhalb der Zellendecke 23 angeordnet ist und somit das Zellendach der Beladezelle 20 ausbildet. Der Türboden 32 hat ein in Richtung Vertikalachse verlaufendes Gefälle und befindet sich etwa auf halber Höhe eines vor der Beladezelle 20 stehenden Maschinenbedieners.

Der vollautomatische Be- und Entladevorgang von Werkstücken 14 mittels des Roboters 22 findet bei geschlossener Kreisbogentür 30 durch eine in Fig. 2 gezeigte Beladeöffnung **34** des Maschinengestells 2 statt, während das Robotereinrichten, das manuelle Be- und Entladen von Werkstücken 14 sowie das Werkstückumrüsten vom Maschinenbediener bei geöffneter Kreisbogentür 30 vorgenommen werden.

Wie in **Fig. 5** gezeigt, ist die Beladezelle 20 zwischen dem Maschinengestell 2 einerseits und einem vertikalen Werkstück-Palettenspeicher **35** andererseits angeordnet. Der Palettenspeicher 35 kann beispielsweise an der Beladezelle 20 höhenverfahrbar geführt sein, wie in Fig. 1 gezeigt ist, oder am Maschinengestell 2 angekoppelt sein. Üblicherweise beinhaltet der Palettenspeicher 35 mehrere in den Zelleninnenraum 21 ausziehbare Schubladen, auf denen die zu bearbeitenden und die bearbeiteten Werkstücke 14 abgelegt sind. Für den an der Zellendecke 23 herunter hängenden Greifroboter 22 stellen ausgezogene Schubladen kein Hindernis dar, was einfache und schnelle Roboterbewegungen ermöglicht. Statt eines Palettenspeichers 35 kann auch ein Transportbandes oder auch eine Stapelzelle für die Werkstückzu- und -abfuhr vorgesehen sein.

## Patentansprüche

1. Werkzeugmaschine (1) zur insbesondere spanenden Bearbeitung von Werkstücken (14), aufweisend einen an einem Maschinengestell (2) drehbar gelagerten Werkstücktisch (4), insbesondere Doppelschwenkträger, für zu bearbeitende Werkstücke (14), und eine am Maschinengestell (2) gehaltene, insbesondere horizontale Werkzeugspindel (15) mit einem Werkzeug (16) zum Bearbeiten von Werkstücken (14),
**dadurch gekennzeichnet,**
**dass** ein Roboter (22) zum Beladen des Werkstücktischs (4) mit zu bearbeitenden Werkstücken (14) und zum Entladen des Werkstücktischs (4) von bearbeiteten Werkstücken (14) in einer Beladezelle (20), welche an das Maschinengestell (2) seitlich angekoppelt ist, hängend gehalten ist,
**dass** die Beladezelle (20) eine um eine Vertikalachse zwischen einer Offen- und einer Geschlossenstellung verschwenkbare Zellentür (30), insbesondere Kreisbogentür, aufweist, die den Zelleninnenraum (21) in der Geschlossenstellung verschließt und in der Offenstellung freigibt, und
**dass** die Zellentür (30) einen insbesondere kreissektorförmigen Türboden (32) aufweist, der zumindest in der Geschlossenstellung unterhalb des Roboters (22) in den Zelleninnenraum (21) hineinragt.

2. Werkzeugmaschine nach Anspruch 1, **dadurch gekennzeichnet, dass** der Roboter (22) an der Zellendecke (23) der Beladezelle (20) hängend gehalten ist.

3. Werkzeugmaschine nach Anspruch 1 oder 2, **dadurch gekennzeichnet, dass** die Zellentür (30) einen insbesondere kreissektorförmigen Türoberboden (33) aufweist, der zumindest in der Geschlossenstellung oberhalb des Roboters (22) angeordnet ist.

4. Werkzeugmaschine nach einem der vorhergehenden Ansprüche, **dadurch gekennzeichnet, dass** der Türboden (32) ein Gefälle aufweist.

5. Werkzeugmaschine nach einem der vorhergehenden Ansprüche, **dadurch gekennzeichnet, dass** der Türboden (32) mindestens auf halber Höhe eines vor der Beladezelle (20) stehenden Maschinenbedieners angeordnet ist.

6. Werkzeugmaschine nach einem der vorhergehenden Ansprüche, **dadurch gekennzeichnet, dass** die Beladezelle (20) mit mindestens einer Befestigungsfläche (24), insbesondere mit einer unteren und einer oberen Befestigungsfläche (24), an mindestens einer Gegenbefestigungsfläche (25) des Maschinengestells (2) befestigt ist.

7. Werkzeugmaschine nach Anspruch 6, **dadurch gekennzeichnet, dass** zwischen einer Befestigungsfläche (24) der Beladezelle (20) und der Gegenbefestigungsfläche (25) des Maschinengestells (2) eine Dämpfungsschicht (26) angeordnet ist.

8. Werkzeugmaschine nach einem der vorhergehenden Ansprüche, **dadurch gekennzeichnet, dass** die Beladezelle (20) einen mit Gefälle versehenen Zellenboden (27) aufweist, der an einen Abfluss des Maschinengestells (2) angebunden ist.

9. Werkzeugmaschine nach Anspruch 8, **dadurch gekennzeichnet, dass** die Abflussanbindung durch Öffnungen (28, 29) gebildet ist, die jeweils in aneinander anliegende Schnittstellflächen der Beladezelle (20) und des Maschinengestells (2) münden.

10. Werkzeugmaschine nach einem der vorhergehenden Ansprüche, **dadurch gekennzeichnet, dass** die Beladezelle (20) zwischen dem Maschinengestell (2) einerseits und einem Werkstückspeicher oder -förderer (35) andererseits angeordnet ist.

11. Werkzeugmaschine nach Anspruch 10, **dadurch gekennzeichnet, dass** der Werkstückspeicher oder -förderer (35) an dem Maschinengestell (2) oder an der Beladezelle (20) angekoppelt ist.

12. Werkzeugmaschine nach einem der vorhergehenden Ansprüche, **dadurch gekennzeichnet, dass** der Werkstücktisch (4) an zwei einander gegenüberliegenden Seitenwänden (11) des Maschinengestells (2) um eine horizontale Achse (3) drehbar gelagert ist und dass die zwei Seitenwände (11) unten durch einen Bodenträger (12) und oben durch einen Deckenträger (13) miteinander verbunden sind.

13. Werkzeugmaschine nach Anspruch 12, **dadurch gekennzeichnet, dass** die zwei einander gegenüberliegenden Seitenwände (11) zusammen mit dem Bodenträger (12) und dem Deckenträger (13) ein Monoblock-Rahmengestell bilden.

## Claims

1. Machine tool (1) for in particular machining processing of workpieces (14), comprising a workpiece table (4), in particular a double tilt support, which is rotatably mounted on a machine frame (2), for workpieces (14) to be processed, and an in particular horizontal tool spindle (15) which is held on the machine frame (2) and comprises a tool (16) for processing workpieces (14), **characterized in**
**that** a robot (22) for loading workpieces (14) to be processed onto the workpiece table (4) and for unloading processed workpieces (14) from the workpiece table (4) is held suspended in a loading cell (20) that is laterally coupled to the machine frame (2),
**that** the loading cell (20) comprises a cell door (30), in particular a circular arc door, which can be pivoted about a vertical axis between an open position and a closed position and closes the cell interior (21) in the closed position and opens it in the open position, and
**that** the cell door (30) has an in particular circular sector shaped door bottom (32) which projects into the cell interior (21) below the robot (22) at least in the closed position.

2. Machine tool according to claim 1, **characterized in that** the robot (22) is held suspended on the cell ceiling (23) of the loading cell (20).

3. Machine tool according to claim 1 or 2, **characterized in that** the cell door (30) comprises an in particular circular sector shaped door upper floor (33) which is arranged above the robot (22) at least in the closed position.

4. Machine tool according to any one of the preceding claims, **characterized in that** the door bottom (32) is sloped.

5. Machine tool according to any one of the preceding claims, **characterized in that** the door bottom (32) is arranged at least at mid-height of a machine operator who is standing in front of the loading cell (20).

6. Machine tool according to any one of the preceding claims, **characterized in that** the loading cell (20) is mounted with at least one mounting surface (24), in particular with a lower and an upper mounting surface (24), to at least one mating mounting surface (25) of the machine frame (2).

7. Machine tool according to claim 6, **characterized in that** a damping layer (26) is arranged between a mounting surface (24) of the loading cell (20) and the mating mounting surface (25) of the machine frame (2).

8. Machine tool according to any one of the preceding claims, **characterized in that** the loading cell (20) comprises a sloping cell bottom (27) that is connected to an outlet of the machine frame (2).

9. Machine tool according to claim 8, **characterized in that** the outlet connection is formed by openings (28, 29) that terminate in each case in abutting interface surfaces of the loading cell (20) and of the machine frame (2).

10. Machine tool according to any one of the preceding claims, **characterized in that** the loading cell (20) is arranged between the machine frame (2) on the one hand and a workpiece storage or conveyor (35) on the other hand.

11. Machine tool according to claim 10, **characterized in that** the workpiece storage or conveyor (35) is coupled to the machine frame (2) or to the loading cell (20).

12. Machine tool according to any one of the preceding claims, **characterized in that** the workpiece table (4) is mounted to two opposing side walls (11) of the machine frame (2) so as to be rotatable about a horizontal axis (3) and that the two side walls (11) are connected to one another at the bottom by a bottom beam (12) and are connected at the top by a ceiling beam (13).

13. Machine tool according to claim 12, **characterized in that** the two opposing side walls (11) together with the bottom beam (12) and the ceiling beam (13) form a monoblock framework.

## Revendications

1. Machine-outil (1) dévolue à l'usinage de pièces (14), notamment par enlèvement de copeaux, comprenant un plateau (4) porte-pièces monté à rotation sur un bâti (2) de la machine, en particulier un support pivotant double affecté à des pièces (14) à usiner, et une broche (15) porte-outils notamment horizontale, retenue sur ledit bâti (2) de ladite machine et équipée d'un outil (16), en vue de l'usinage de pièces (14),
**caractérisée par le fait**
**qu'**un robot (22), conçu pour charger le plateau (4) porte-pièces en pièces (14) à usiner et pour décharger des pièces usinées (14) dudit plateau (4) porte-pièces, est retenu en suspension dans une cellule de chargement (20) couplée latéralement au bâti (2) de ladite machine ;
par le fait que ladite cellule de chargement (20) est pourvue d'une porte (30), en particulier d'une porte en arc de cercle apte à pivoter autour d'un axe vertical, entre des positions d'ouverture et de fermeture, qui obture l'espace interne (21) de ladite cellule dans la position de fermeture, et le libère dans la position d'ouverture ; et
par le fait que ladite porte (30) de la cellule est munie d'un fond (32) notamment en forme de secteur circulaire qui pénètre dans ledit espace interne (21) de ladite cellule, au moins dans ladite position de fermeture, au-dessous dudit robot (22).

2. Machine-outil selon la revendication 1, **caractérisée par le fait que** le robot (22) est retenu en suspension au plafond (23) de la cellule de chargement (20).

3. Machine-outil selon la revendication 1 ou 2, **caractérisée par le fait que** la porte (30) de la cellule est dotée d'un fond supérieur (33) notamment en forme de secteur circulaire disposé au-dessus du robot (22), au moins dans la position de fermeture.

4. Machine-outil selon l'une des revendications précédentes, **caractérisée par le fait que** le fond (32) de la porte présente une déclivité.

5. Machine-outil selon l'une des revendications précédentes, **caractérisée par le fait que** le fond (32) de la porte se trouve au moins à mi-hauteur d'un opérateur de ladite machine posté devant la cellule de chargement (20).

6. Machine-outil selon l'une des revendications précédentes, **caractérisée par le fait que** la cellule de chargement (20) est fixée par au moins une surface de fixation (24), notamment par des surfaces de fixation (24) inférieure et supérieure, à au moins une surface de fixation complémentaire (25) du bâti (2) de ladite machine.

7. Machine-outil selon la revendication 6, **caractérisée par le fait qu'**une couche d'amortissement (26) est interposée entre une surface de fixation (24) de la cellule de chargement (20) et la surface de fixation complémentaire (25) du bâti (2) de ladite machine.

8. Machine-outil selon l'une des revendications précédentes, **caractérisée par le fait que** la cellule de chargement (20) est pourvue d'un fond (27) présentant une déclivité, qui est raccordé à un point d'évacuation du bâti (2) de ladite machine.

9. Machine-outil selon la revendication 8, **caractérisée par le fait que** le raccordement au point d'évacuation est matérialisé par des orifices (28, 29) débouchant dans des surfaces respectives de rattachement, en applique l'une contre l'autre, de la cellule de chargement (20) et du bâti (2) de ladite machine.

10. Machine-outil selon l'une des revendications précédentes, **caractérisée par le fait que** la cellule de chargement (20) est interposée entre, d'une part, le bâti (2) de ladite machine et, d'autre part, un accumulateur ou convoyeur (35) de pièces.

11. Machine-outil selon la revendication 10, **caractérisée par le fait que** l'accumulateur, ou convoyeur (35) de pièces, est couplé au bâti (2) de ladite machine ou à la cellule de chargement (20).

12. Machine-outil selon l'une des revendications précédentes, **caractérisée par le fait que** le plateau (4) porte-pièces est monté à rotation, autour d'un axe horizontal (3), entre deux parois latérales (11) situées en regard l'une de l'autre sur le bâti (2) de ladite machine ; et **par le fait que** les deux parois latérales (11) sont reliées l'une à l'autre, en partie basse, par l'intermédiaire d'un support (12) solidaire du fond et, en partie haute, par l'intermédiaire d'un support (13) solidaire du plafond.

13. Machine-outil selon la revendication 12, **caractérisée par le fait que** les deux parois latérales (11), situées en regard l'une de l'autre, forment un châssis monobloc en association avec le support (12) solidaire du fond, et avec le support (13) solidaire du plafond.
